# EUROPEAN PATENT APPLICATION

(11) **EP 4 598 204 A1**
(43) Date of publication of application: **06.08.2025**
(21) Application number: 23872358.9
(22) Date of filing: 26.09.2023
(51) Int. Cl.: H04W 72/1268

(54) **TERMINAL DEVICE, BASE STATION DEVICE, COMMUNICATION SYSTEM, COMMUNICATION METHOD, AND PROGRAM**

(30) Priority: 30.09.2022 JP 2022158496
(71) Applicant: NEC Corporation, 108-8001 Tokyo (JP)
(72) Inventor: KIKUCHI, Tooru, Tokyo 108-8001 (JP)
(74) Representative: Mathys & Squire
(86) International application number: PCT/JP2023/034984
(87) International publication number: WO 2024/071135

(57) **Abstract**

A base station apparatus appropriately controls scheduling of an uplink. A terminal apparatus (1) includes measuring means (11) for measuring an elapsed time from when a packet is received from a higher layer to when the uplink data is transmitted to the base station apparatus by using the radio resource for the uplink, and transmitting means (12) for transmits the measured elapsed time to the base station apparatus as a delay time.

## Description

### Technical Field

The present invention relates to a terminal apparatus, a base station apparatus, a communication system, a communication method, and a program.

### Background Art

In recent years, radio communication technologies such as LTE (Long Term Evolution) and NR (New Radio) have been developed. In LTE and NR, all information is converted into IP (Internet Protocol) packets, and QoS (Quality of Service) control is performed in order to control priorities in a detailed manner.

In the QoS control, QCI (QoS Class Identifier), which is a parameter indicating quality, is designated for each bearer of each service (5QI (5G QoS Identifier) in the case of NR), and a priority, whether the band is limited or not, an allowable delay time, a packet loss rate, and the like are determined according to the value of the QCI. In the control of radio resources in radio communication between a base station and a terminal, a functional unit called a scheduler in a MAC (Medium Access Control) layer of the base station allocates a frequency-domain radio resource and a time-domain radio resource for each terminal so that conditions determined according to the QCI are satisfied for data to be transmitted/received.

Patent Literature 1 discloses that when an access terminal is scheduled for uplink transmission, a base station can use delay-related information, and this delay-related information is related to, for example, the length of time that data waits in a buffer associated with a specific access terminal.

### Citation List

### Patent Literature

Patent Literature 1: Published Japanese Translation of PCT International Publication for Patent Application, No. 2011-511587

### Summary of Invention

### Technical Problem

A base station allocates radio resources for an uplink according to a data size notified by a terminal, radio quality to be measured, and quality conditions designated by the QCI. Note that there is an allowable delay as a quality condition of the QCI, but only the data size of each LCG (Logical Channel Group) is notified from the terminal to the base station. Therefore, the base station cannot recognize the delay time of IP packets in the terminal, and hence cannot appropriately control scheduling according to the allowable delay.

Further, as described above, Patent Literature 1 discloses that when an access terminal is scheduled for uplink transmission, the base station uses delay-related information. However, since this delay-related information is set as a result of a comparison with a delay threshold, the base station cannot recognize the detailed delay time of IP packets in the terminal, and hence cannot appropriately control scheduling according to the allowable delay.

In an aspect, the present invention has been made in view of the above-described problem, and an object of thereof is to provide a technology for enabling a base station apparatus to appropriately control scheduling of an uplink.

### Solution to Problem

A terminal apparatus according to an aspect of the present invention is a terminal apparatus configured to transmit uplink data to a base station apparatus by using a radio resource for an uplink allocated by the base station apparatus, including: measuring means for measuring an elapsed time from when a packet is received from a higher layer to when the uplink data is transmitted to the base station apparatus by using the radio resource for the uplink; and transmitting means for transmitting the measured elapsed time to the base station apparatus as a delay time.

A base station apparatus according to an aspect of the present invention is a base station apparatus configured to perform scheduling of an uplink according to a buffer state report indicating a buffer size of uplink data transmitted from a terminal apparatus, including: receiving means for receiving an elapsed time from the terminal apparatus as a delay time, the elapsed time being a time from when the terminal apparatus receives a packet from a higher layer to when the uplink data is transmitted to the base station apparatus by using a radio resource for the uplink allocated by the base station apparatus; and scheduling means for performing scheduling of the uplink based on the delay time.

A communication system according to an aspect of the present invention is a communication system including a terminal apparatus configured to transmit uplink data to a base station apparatus by using a radio resource for an uplink allocated by the base station apparatus, and a base station apparatus configured to perform scheduling of the uplink according to a buffer state report indicating a buffer size of the uplink data transmitted from the terminal apparatus, in which the terminal apparatus includes: measuring means for measuring an elapsed time from when a packet is received from a higher layer to when the uplink data is transmitted to the base station apparatus by using the radio resource for the uplink; and transmitting means for transmitting the measured elapsed time to the base station apparatus as a delay time, and the base station apparatus includes: receiving means for receiving the delay time from the terminal apparatus; and scheduling means for performing scheduling of the uplink based on the delay time.

A communication method for a terminal apparatus according to an aspect of the present invention is a communication method for a terminal apparatus configured to transmit uplink data to a base station apparatus by using a radio resource for an uplink allocated by the base station apparatus, the communication method including: measuring an elapsed time from when a packet is received from a higher layer to when the uplink data is transmitted to the base station apparatus by using the radio resource for the uplink; and transmitting the measured elapsed time to the base station apparatus as a delay time.

A program according to an aspect of the present invention is a program for a computer provided in a terminal apparatus configured to transmit uplink data to a base station apparatus by using a radio resource for an uplink allocated by the base station apparatus, the program being configured to cause the computer to perform: a process for measuring an elapsed time from when a packet is received from a higher layer to when the uplink data is transmitted to the base station apparatus by using the radio resource for the uplink; and a process for transmitting the measured elapsed time to the base station apparatus as a delay time.

### Advantageous Effects of Invention

According to an aspect of the present invention, a base station apparatus can appropriately control scheduling of an uplink.

### Brief Description of Drawings

Fig. 1 is a block diagram showing an example of a configuration of a terminal apparatus according to a first example embodiment of the present invention;
Fig. 2 is a flow diagram showing a flow of a processing method performed by the terminal apparatus according to the first example embodiment of the present invention;
Fig. 3 is a block diagram showing an example of a configuration of a base station apparatus according to the first example embodiment of the present invention;
Fig. 4 is a flow diagram showing a flow of a processing method performed by the base station apparatus according to the first example embodiment of the present invention;
Fig. 5 is a block diagram showing an example of a configuration of a communication system according to the first example embodiment of the present invention;
Fig. 6 shows an example of a MAC CE for notifying a base station apparatus of a delay time of an IP packet transmitted from a terminal apparatus;
Fig. 7 shows indices of delay times;
Fig. 8 is a sequence diagram for explaining communication between a terminal apparatus and a base station apparatus;
Fig. 9 shows another example of a MAC CE for notifying a base station apparatus of a delay time of an IP packet transmitted from a terminal apparatus;
Fig. 10 shows another example of a MAC CE for notifying a base station apparatus of a delay time of an IP packet transmitted from a terminal apparatus;
Fig. 11 shows a list of MAC CEs; and
Fig. 12 is a block diagram showing a configuration of a computer that functions as a terminal apparatus, a base station apparatus or a communication system according to each example embodiment.

### Example Embodiment

### <Overview of Invention>

In the downlink of radio communication such as LTE and NR, all information about IP packets to be transmitted/received are present on the base station side. Therefore, the base station can obtain detailed information such as the number of IP packets remaining in a buffer in the downlink and the delay time of each IP packet, so that it can control priorities in a detailed manner.

Meanwhile, in the uplink, all information about IP packets to be transmitted/received are present on the terminal side. Therefore, when there is uplink data to be transmitted in the terminal, the terminal requests the scheduler of the base station to allocate radio resources therefor. As a typical procedure, the terminal informs the base station that there is transmission data by using an SR (Scheduling Request) which is transmitted in a PUCCH (Physical Uplink Control Channel) or by using an RACH (Random Access Channel) procedure.

Next, the base station allocates, for the terminal, radio resources for the uplink. Using the radio resources, the terminal notifies the base station of the data size of IP packets to be transmitted by using a BSR (Buffer Status Report) in the unit of several logical channels called LCG. The base station allocates radio resources for the uplink according to the data size notified by the terminal, radio quality to be measured, and quality conditions designated by the QCI.

In this process, there is an allowable delay as a quality condition of the QCI. However, since only the data size of each LCG is notified from the terminal to the base station, the base station cannot recognize the delay time of the IP packet that the terminal has received from a higher layer, thus causing a problem that the base station cannot appropriately control the allowable delay.

When the terminal receives IP packets to be transmitted, the terminal informs the base station that there is transmission data in the terminal by the SR or the RACH procedure. Therefore, it can be considered that the data has occurred when the SR or RACH procedure is received. However, when the reception of the SR or the RACH procedure is delayed due to the environment in which the radio quality is poor, the base station apparatus cannot recognize the correct time at which the IP packets were generated. Further, when IP packets are successively generated, the BSR is successively updated, so that the base station apparatus cannot find out the delay time of the IP packets.

According to the present invention, the scheduling of the uplink is appropriately controlled on the base station apparatus side by measuring an elapsed time from when a packet is received from a higher layer to when uplink data is transmitted to the base station apparatus by using radio resources for the uplink, and notifying the base station apparatus of the measured elapsed time as a delay time.

### [First Example Embodiment]

### <Terminal Apparatus 1 according to First Example Embodiment>

A first example embodiment according to the present invention will be described in detail with reference to the drawings. This example embodiment serves as a basis for other example embodiments described later. Note that reference numerals added to elements in the drawings in the below-described overview are added as examples for facilitating understanding, and they are not intended to limit the present invention to the example embodiment shown in the drawings. Further, connecting lines between blocks in the drawings and the like which are referred to in the following description include both bidirectional lines and unidirectional lines. Unidirectional arrows schematically show flows of main signals (data), and are not intended to exclude bidirectional flows. Further, a port or an interface may be provided at a connection point between inputs/outputs of each block in the drawings, but its configuration is omitted in the drawings.

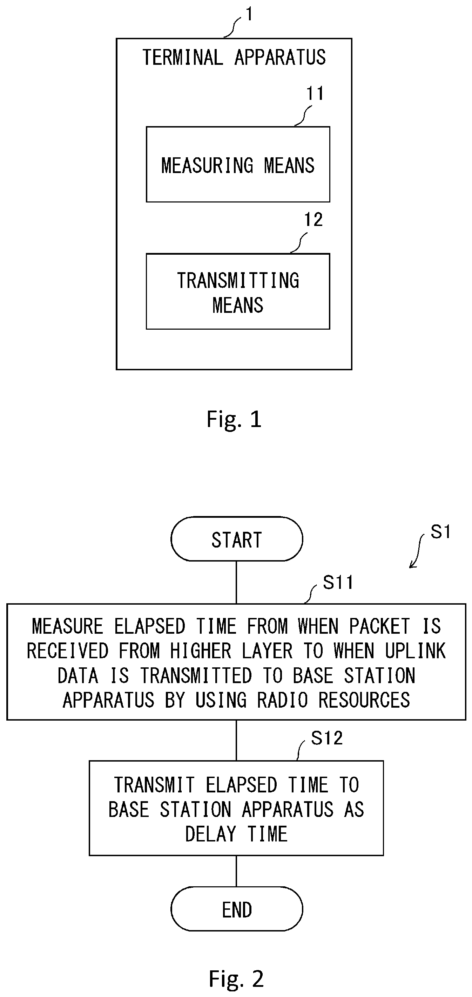

Fig. 1 is a block diagram showing an example of a configuration of a terminal apparatus 1 according to a first example embodiment of the present invention. The terminal apparatus 1 according to this example embodiment is a terminal apparatus that transmits uplink data to a base station apparatus by using radio resources for the uplink allocated by the base station apparatus, and includes measuring means 11 and transmitting means 12 as shown in Fig. 1.

The base station apparatus is, for example, a gNB (next generation Node B) in a 5G (fifth generation mobile communication system) core network (5GC) specified by 3GPP (third generation mobile communication system partnership project) or an eNB (evolved Node B) in a 4G (fourth generation mobile communication system) core network (4GC).

When the terminal apparatus 1 notifies the base station apparatus of the occurrence (SR) of uplink data by using the SR of PUCCH or the RACH procedure, the base station apparatus allocates, for the terminal apparatus 1, radio resources for the uplink (in a frequency domain and a time domain for each terminal apparatus 1) for BSR transmission or uplink data transmission.

When the radio resources for the uplink are allocated by the base station apparatus, the terminal apparatus 1 transmits the uplink data to the base station apparatus by using the allocated radio resources. In this process, the measuring means 11 measures an elapsed time from when a packet is received from a higher layer to when uplink data is transmitted to the base station apparatus by using the radio resources for the uplink allocated by the base station apparatus.

Note that the elapsed time is measured for the oldest packet remaining in the terminal apparatus (a packet that could not be transmitted by the radio resources for the uplink allocated in the current process).

For example, when a layer 2 (e.g., a PDCP (Packet Data Convergence Protocol) layer) of the terminal apparatus 1 receives a packet (e.g., an IP packet) from a network layer, which is a higher layer, the measuring means 11 starts measuring the elapsed time.

Note that the higher layer is not limited to the network layer. For example, the layer 2 includes a PDCP layer, an RLC (Radio Link Control) layer, and a MAC (Media Access Control) layer, and each of these layers may become a higher layer depending on the layer that receives the packet.

The measuring means 11 finishes the measurement of the elapsed time when the terminal apparatus 1 transmits the uplink data to the base station apparatus by using the radio resources for the uplink allocated by the base station apparatus. This elapsed time includes a time from when the terminal apparatus 1 notifies the base station apparatus of a scheduling request (SR) to when it receives an uplink grant (UL Grant) from the base station apparatus.

The transmitting means 12 transmits the measured elapsed time to the base station apparatus as a delay time. The base station apparatus controls the scheduling of uplink data in the uplink by referring to information such as this delay time and the BSR.

### <Effect of Terminal Apparatus 1>

As described above, according to the terminal apparatus 1 in accordance with this example embodiment, the transmitting means 12 transmits a delay time measured by the measuring means 11 to the base station apparatus. Therefore, the base station apparatus can appropriately control the scheduling of the uplink based on the delay time in the terminal apparatus 1.

### <Flow of Processing Method performed by Terminal Apparatus 1>

A flow of a processing method performed by the terminal apparatus 1 configured as described above will be described with reference to Fig. 2. Fig. 2 is a flowchart showing the flow of the processing method performed by the terminal apparatus 1 according to the first example embodiment. As shown in Fig. 2, a processing method S 1 is one performed by the terminal apparatus 1 in which the terminal apparatus 1 transmits uplink data to the base station apparatus by using radio resources for the uplink allocated by the base station apparatus, and includes steps S11 to S12.

When radio resources for the uplink are allocated by the base station apparatus, the terminal apparatus 1 transmits the uplink data to the base station apparatus by using the allocated radio resources. In this process, the measuring means 11 measures an elapsed time from when a packet is received from a higher layer to when uplink data is transmitted to the base station apparatus by using radio resources for the uplink (S11).

Note that the elapsed time is measured for the oldest packet remaining in the terminal apparatus (a packet that could not be transmitted by the radio resources for the uplink allocated in the current process).

Next, the transmitting means 12 transmits the measured elapsed time to the base station apparatus as a delay time. The base station apparatus controls the scheduling of the uplink data in the uplink by referring to information such as the delay time and the BSR.

### <Effect of Communication Method S1 performed by Terminal Apparatus 1>

As described above, according to the communication method performed by the terminal apparatus 1 in accordance with this example embodiment, the transmitting means 12 transmits a delay time measured by the measuring means 11 to the base station apparatus. Therefore, the base station apparatus can appropriately control the scheduling of the uplink based on the delay time in the terminal apparatus 1.

### <Base Station Apparatus 2 according to First Example Embodiment>

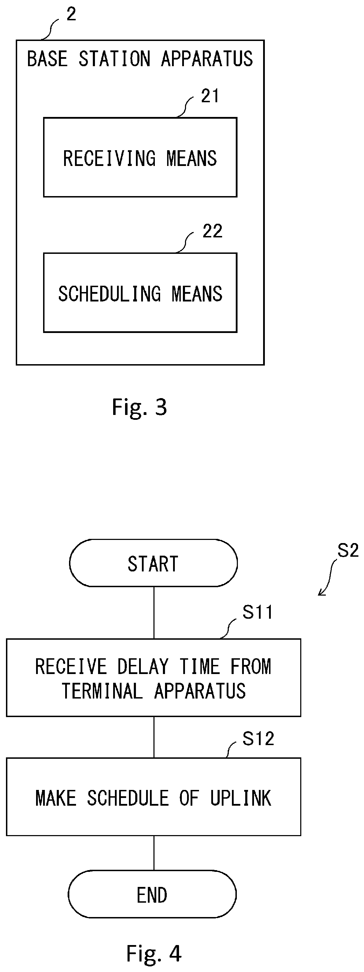

Fig. 3 is a block diagram showing an example of a configuration of a base station apparatus 2 according to the first example embodiment of the present invention. The base station apparatus 2 according to this example embodiment of the present invention is one that performs scheduling of an uplink according to a buffer state report indicating a buffer size of uplink data from a terminal apparatus 1, and includes receiving means 21 and scheduling means 22 as shown in Fig. 3.

The receiving means 21 receives, from the terminal apparatus 1, as a delay time, an elapsed time from when the terminal apparatus 1 receives a packet from a higher layer to when the terminal apparatus 1 transmits uplink data to the base station apparatus 2 by using radio resources for the uplink allocated by the base station apparatus 2.

The expression that the terminal apparatus 1 receives a packet from a higher layer means that, for example, a layer 2 (e.g., a PDCP layer) of the terminal apparatus 1 receives a packet (e.g., an IP packet) from a network layer, which is a higher layer.

The scheduling means 22 performs scheduling of the uplink based on the delay time. For example, when the priorities of logical channels are equal to each other, the scheduling means 22 may preferentially allocate radio resources to a logical channel of which a time (time margin) obtained by subtracting the delay time received from the terminal apparatus 1 from an allowable delay which is a quality condition of the QCI is smaller than that of the other logical channel. That is, the scheduling means 22 preferentially allocates radio resources to data from a logical channel having a small time margin.

### <Effect of Base Station Apparatus 2>

As described above, according to the base station apparatus 2 in accordance with this example embodiment, since the scheduling means 22 performs scheduling of the uplink based on a delay time received from the terminal apparatus 1, it is possible to appropriately control the scheduling of the uplink based on the delay time of packets in the terminal apparatus 1.

### <Flow of Processing Method performed by Base Station Apparatus 2>

A flow of a processing method performed by the base station apparatus 2 configured as described above will be described with reference to Fig. 4. Fig. 4 is a flowchart showing the flow of the processing method performed by the base station apparatus 2 according to the first example embodiment. As shown in Fig. 4, a processing method S2 includes steps S21 and S22.

Firstly, the receiving means 21 receives, from the terminal apparatus 1, as a delay time, an elapsed time from when the terminal apparatus 1 receives a packet from a higher layer to when the terminal apparatus 1 transmits uplink data to the base station apparatus 2 by using radio resources for the uplink allocated by the base station apparatus 2 (S21).

Next, the scheduling means 22 performs scheduling of the uplink based on the delay time (S22). For example, when the priorities of logical channels are equal to each other, the scheduling means 22 preferentially allocates radio resources to a logical channel of which a time (time margin) obtained by subtracting the delay time received from the terminal apparatus 1 from an allowable delay which is a quality condition of the QCI is smaller than that of the other logical channel.

### <Communication System 100 according to First Example Embodiment>

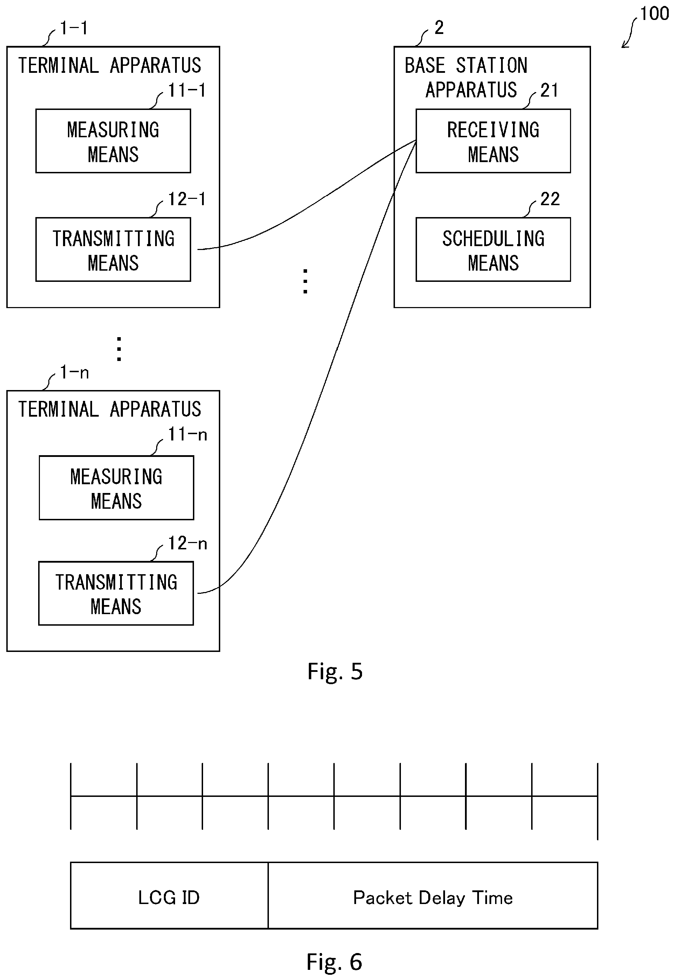

Fig. 5 is a block diagram showing an example of a configuration of a communication system 100 according to the first example embodiment of the present invention. The communication system 100 according to this example embodiment includes a plurality of terminal apparatuses 1-1 to 1-n each of which transmits uplink data to a base station apparatus 2 by using radio resources for the uplink allocated by the base station apparatus 2, and the base station apparatus 2 that performs scheduling of the uplink according to a buffer state report indicating a buffer size of uplink data transmitted from each of the terminal apparatuses 1-1 to 1-n.

In each of the terminal apparatuses 1-1 to 1-n, when radio resources for the uplink are allocated for the terminal apparatus by the base station apparatus 2, the terminal apparatus transmits the uplink data to the base station apparatus 2 by using the allocated radio resources. In this process, each of measuring means 11-1 to 11-n measures an elapsed time from when a packet is received from a higher layer to when the uplink data is transmitted to the base station apparatus 2 by using the radio resources for the uplink.

Note that the elapsed time is measured for the oldest packet remaining in the terminal apparatus (a packet that could not be transmitted by the radio resources for the uplink allocated in the current process).

Each of transmitting means 12-1 to 12-n transmits the measured elapsed time to the base station apparatus 2 as a delay time.

The receiving means 21 receives the delay time from each of the transmitting means 12-1 to 12-n of the terminal apparatuses 1-1 to 1-n.

The scheduling means 22 performs scheduling of the uplink based on the delay time received from each of the terminal apparatuses 1-1 to 1-n. For example, when the priorities of logical channels of the terminal apparatuses 1-1 and 1-2 are equal to each other, the scheduling means 22 preferentially allocates radio resources to a logical channel of which a time (time margin) obtained by subtracting the delay time received from the corresponding one of the terminal apparatuses 1-1 and 1-2 from an allowable delay, which is a quality condition of the QCI, for the corresponding terminal apparatus is smaller than that of the other logical channel.

### <Effect of Communication System 100>

As described above, according to the communication system 100 in accordance with this example embodiment, since the scheduling means 22 performs scheduling of the uplink based on a delay time received from each of the terminal apparatuses 1-1 to 1-n, it is possible to appropriately control the scheduling of the uplink based on the delay time of packets in each of the terminal apparatuses 1-1 to 1-n.

### [Second Example Embodiment]

### <Communication System according to Second Example Embodiment>

A configuration of a communication system according to a second example embodiment of the present invention is similar to that of the communication system 100 according to the first example embodiment of the present invention shown in Fig. 5. Therefore, detailed descriptions of the same configurations and functions will not be repeated.

The transmitting means 12 of the terminal apparatus 1 may transmit a delay time measured by the measuring means 11 by adding it to a medium access control element (MAC CE) of a packet. Further, the medium access control element (MAC CE) may also include a logical channel group identifier and an index indicating a delay time.

Fig. 6 shows an example of a MAC CE used to notify a delay time of an IP packet from each of the terminal apparatuses 1-1 to 1-n to the base station apparatus 2. As shown in Fig. 6, the MAC CE (hereinafter referred to as a Packet Delay Time MAC CE) consists of a part indicating an LCG ID (Identifier) and a part indicating an index (Index) of a delay time (Packet Delay Time). The LCG ID indicates an ID of an LCG notified to the base station apparatus 2, and the index (Index) of a delay time indicates a time range for delay times of IP packets.

This Packet Delay Time MAC CE is added to the LCID in Table 6.2.1-2 in Chapter 6.1.3 of TS38.321 on the assumption that it will be newly added to the MAC CE in Chapter 6.1.3 of TS38.321. Since the Packet Delay Time MAC CE shown in this example embodiment is expressed by eight bits, it is defined as a Short Packet Delay Time in this specification.

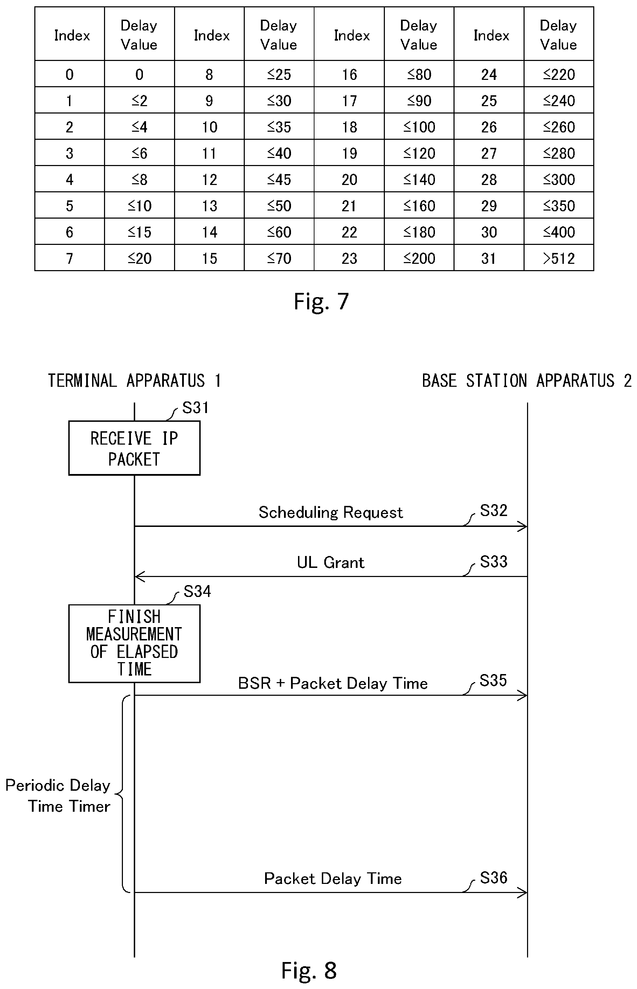

Fig. 7 shows indices of delay times. For example, indices (Indices) are represented by decimal numbers 0 to 31, and delay times (Delay Values) corresponding to respective indices (Indices) are specified. For example, when the index (Index) is "8", it indicates that the delay time is larger than 20 ms and equal to or smaller than 25 ms.

Fig. 8 is a sequence diagram for explaining communication between the terminal apparatus 1 and the base station apparatus 2. Firstly, when the terminal apparatus 1 receives an IP packet from a higher layer (S31), the measuring means 11 of the terminal apparatus 1 starts measuring an elapsed time as described above.

Next, the terminal apparatus 1 notifies the base station apparatus 2 of the occurrence (SR) of transmission data by using the SR of PUCCH or the RACH procedure (S32). When the base station apparatus 2 receives the SR, it allocates, for the terminal apparatus 1, radio resources for the uplink for the transmission of a BSR or for the transmission of data, and notifies the terminal apparatus 1 of an uplink grant (UL Grant) (S33).

The measuring means 11 finishes the measurement of the elapsed time when the terminal apparatus 1 transmits the uplink data to the base station apparatus 2 by using the radio resources for the uplink (S34). Therefore, the elapsed time includes a time from when the terminal apparatus 1 notifies the base station apparatus 2 of a scheduling request (SR) to when it receives an uplink grant (UL Grant) from the base station apparatus 2.

The terminal apparatus 1 extracts, by using the elapsed time measured by the measuring means 11 as a delay time (Packet Delay Time), an index (Index) corresponding to the delay time shown in Fig. 7, and generates a Packet Delay Time MAC CE by using an LCG ID corresponding to the IP packet and the extracted index (Index) as shown in Fig. 6. The terminal apparatus 1 transmits the generated Packet Delay Time MAC CE together with the BSR MAC CE to the base station apparatus 2 by using the radio resources for the uplink (S35).

Further, it is also conceivable that the terminal apparatus 1 successively receives IP packets from a higher layer, so that it always holds IP packets. In this case, since it is inefficient for the terminal apparatus 1 to transmit a Packet Delay Time MAC CE every time it receives an IP packet, a timer (Periodic Delay Time Timer) for triggering the transmission of a Packet Delay Time MAC CE may be provided, and a Packet Delay Time MAC CE may be transmitted every time the timer expires (S36).

In this process, an IP packet having the longest delay time among the IP packets held by the terminal apparatus 1 is notified as the value of the delay time of the IP packet to be notified by the Packet Delay Time MAC CE. The condition for triggering the transmission of a Packet Delay Time MAC CE in the above-described process is similar to that of the Buffer Status Report in Chapter 5.4.5 of TS38.321, and may be controlled by providing a Prohibit Timer or the like.

The base station apparatus 2 allocates radio resources so as to satisfy an allowable delay, a priority, and the like, which are determined in advance by the QCI, by using the BSR received from the terminal apparatus 1 and information about the delay time.

The medium access control element (MAC CE) may include a plurality of logical channel group identifiers and a plurality of delay times each corresponding to a respective one of the plurality of logical channel group identifiers.

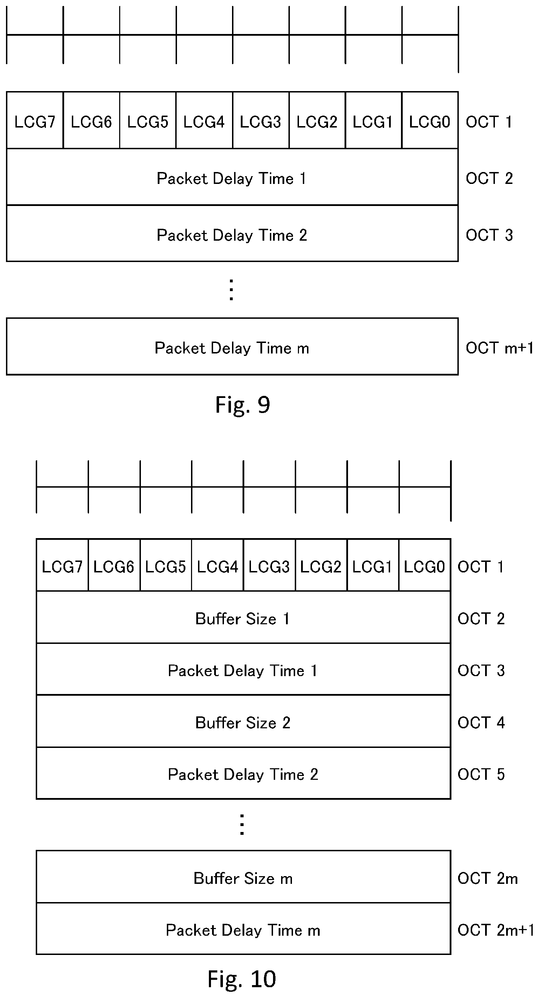

Fig. 9 shows another example of a MAC CE used to notify a delay time of an IP packet from the terminal apparatus 1 to the base station apparatus 2. As shown in Fig. 9, when there are a plurality of LCGs, the MAC CE may have a format for notifying a plurality of delay times corresponding to the plurality of LCGs.

The information indicating the LCG is in an 8-bit bitmap format, and "1" is set in each of bits corresponding to LCGs the values of which are to be notified. For each of LCGs for which "1" is set, the delay time is notified by using 8-bit information as shown in the second and subsequent rows in Fig. 9.

Note that although Indices are used for the time range for delay times in Fig. 6, the absolute values of the delay times, instead of the Indices thereof, are notified. When the delay times are notified by using their absolute values, the part indicating the delay time indicates a value in the unit of 2 ms, and indicates the absolute time that starts to be measured upon the reception of the IP packet. When a plurality of IP packets are held by the terminal apparatus 1, the value of the IP packet having the largest delay time is notified as in the case of Fig. 6. Note that since the Packet Delay Time MAC CE is extended into information about a plurality of LCGs, it is defined as a Long Packet Delay Time.

The medium access control element (MAC CE) may include a buffer state report indicating a buffer size of uplink data, and a delay time.

Fig. 10 shows another example of a MAC CE used to notify a delay time of an IP packet from the terminal apparatus 1 to the base station apparatus 2. In Fig. 9, the MAC CE is formed solely by the Packet Delay Time MAC CE. However, the BSR and the transmission timing can be expressed by the same information item, so that one combined MAC CE format can be adopted. The fundamental configuration is similar to that shown in Fig. 9, but the BSR and the Packet Delay Time are collectively transmitted as information to be notified for each LCG. In this way, the overhead can be reduced, and the Packet Delay Time can be notified together with the BSR. In this case, they are newly defined as a Packet Delay Time BSR.

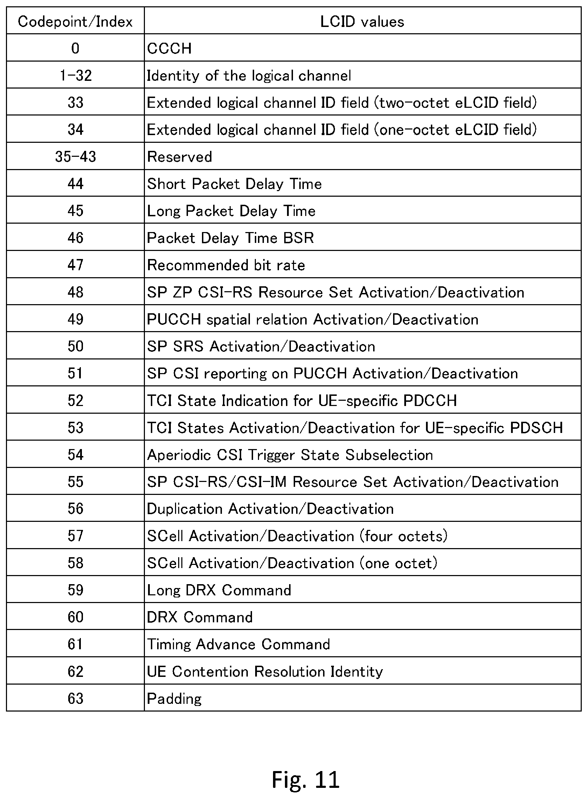

Fig. 11 shows a list of MAC CEs. As shown in Fig. 11, the Short Packet Delay Time described above with reference to Fig. 6 is defined as an LCID "44". Further, the Long Packet Delay Time described above with reference to Fig. 9 is defined as an LCID "45". Further, the Packet Delay Time BSR described above with reference to Fig. 10 is defined as an LCID "46". Note that those defined in the other LCIDs are ordinary contents and will not be described in detail. Further, Fig. 11 is merely an example, and the Short Packet Delay Time, Long Packet Delay Time, and Packet Delay Time BSR may be specified in any of the LCIDs indicated as Reserved in Fig. 11. Further, these LCIDs are those for Uplink-Shared Channel (UL-SCH) specified in Table 6.2.1-2 of TS38.321.

### <Effect of Terminal Apparatus 1>

As described above, according to the terminal apparatus 1 in accordance with this example embodiment, since the transmitting means 12 adds a delay time measured by the measuring means 11 to the MAC CE and transmits it to the base station apparatus 2, it is possible to transmit the delay time to the base station apparatus 2 without changing the structure of the IP packet.

Further, since the MAC CE includes a logical channel group identifier and an index indicating a delay time, it is possible to express a delay time for each logical channel group with a small amount of data.

Further, since the MAC CE includes a plurality of logical channel group identifiers and a plurality of delay times each corresponding to a respective one of the plurality of logical channel group identifiers, it is possible to transmit a delay time for each logical channel group to the base station apparatus 2 in a more detailed manner.

Further, since the MAC CE includes a buffer state report (BSR) indicating a buffer size of uplink data, and a delay time, it is possible to reduce the overhead and notify the delay time together with the BSR.

### [Example of Software Implementation]

Some or all of the functions of the terminal apparatus 1, the base station apparatus 2, and the communication system 100 may be implemented by hardware such as an integrated circuit (IC chip) or by software.

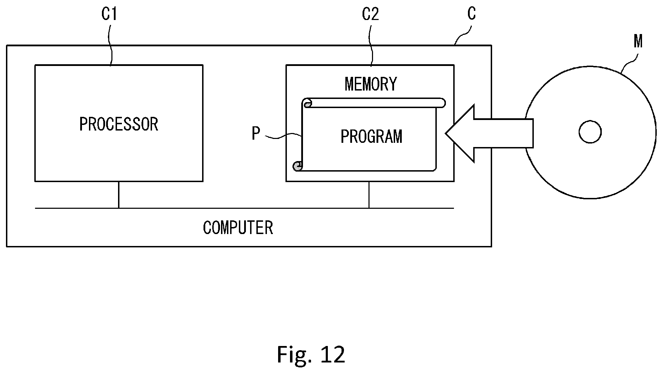

In the latter case, the terminal apparatus 1, the base station apparatus 2, and the communication system 100 may be implemented by, for example, a computer that executes instructions of a program which is software for implementing each function. Fig. 12 shows an example of such a computer (hereinafter referred to as a computer C). The computer C includes at least one processor C1 and at least one memory C2. A program P for operating the computer C as the terminal apparatus 1, the base station apparatus 2, or the communication system 100 is recorded in the memory C2. In the computer C, the processor C1 loads the program P from the memory C2 and executes the loaded program, so that the functions of the terminal apparatus 1, the base station apparatus 2, or the communication system 100 are implemented.

The processor C1 may be, for example, a CPU (Central Processing Unit), a GPU (Graphic Processing Unit), a DSP (Digital Signal Processor), an MPU (Micro Processing Unit), an FPU (Floating Point Number Processing Unit), a PPU (Physics Processing Unit), a microcontroller, or a combination thereof. The memory C2 may be, for example, a flash memory, an HDD (Hard Disk Drive), an SSD (Solid State Drive), or a combination thereof.

Note that the computer C may further include a RAM for unfolding the program P when it is executed, and for temporarily storing various data. Further, the computer C may further include a communication interface for transmitting/receiving data to/from other apparatuses. Further, the computer C may further include an input/output interface for connecting input/output devices such as a keyboard, a mouse, a display device, and a printer.

Further, the program P can be recorded on a non-transitory tangible recording medium M that the computer C can read. As such a recording medium M, for example, a tape, a disk, a card, a semiconductor memory, or a programmable logic circuit can be used. The computer C can acquire the program P through such a recording medium M. Further, the program P can be transmitted through a transmission medium. As such a transmission medium, for example, a communication network or a broadcast wave can be used. The computer C can also acquire the program P through such a transmission medium.

### [Supplementary Matter 1]

The present invention is not limited to the above-described example embodiments, and various modifications can be made within the scope of the claims. For example, example embodiments obtained by combining technical means disclosed in the above-described example embodiments are also included in the technical scope of the present invention.

### [Supplementary Matter 2]

A part or the whole of the above-described example embodiments may be described as shown below. However, the present invention is not limited to the aspects shown below.

### (Supplementary note 1)

A terminal apparatus configured to transmit uplink data to a base station apparatus by using a radio resource for an uplink allocated by the base station apparatus, comprising:
measuring means for measuring an elapsed time from when a packet is received from a higher layer to when the uplink data is transmitted to the base station apparatus by using the radio resource for the uplink; and
transmitting means for transmitting the measured elapsed time to the base station apparatus as a delay time.

According to the above-described configuration, the base station apparatus can appropriately control the scheduling of the uplink based on the delay time in the terminal apparatus.

### (Supplementary note 2)

The terminal apparatus described in Supplementary note 1, wherein the elapsed time includes a time from when a scheduling request is notified to the base station apparatus to when an uplink grant is received from the base station apparatus.

### (Supplementary note 3)

The terminal apparatus described in Supplementary note 1 or 2, wherein the transmitting means transmits the delay time by adding the delay time to a medium access control element of the packet.

According to the above-described configuration, the delay time can be transmitted to the base station apparatus without changing the structure of the IP packet.

### (Supplementary note 4)

The terminal apparatus described in Supplementary note 3, wherein the medium access control element includes a logical channel group identifier and an index indicating a delay time.

According to the above-described configuration, a delay time for each logical channel group can be expressed with a small amount of data.

### (Supplementary note 5)

The terminal apparatus described in Supplementary note 3, wherein the medium access control element includes a plurality of logical channel group identifiers and a plurality of delay times each corresponding to a respective one of the plurality of logical channel group identifiers.

According to the above-described configuration, a delay time for each logical channel group can be transmitted to the base station apparatus in a more detailed manner.

### (Supplementary note 6)

The terminal apparatus described in Supplementary note 3, wherein the medium access control element includes a buffer state report indicating a buffer size of uplink data, and a delay time.

According to the above-described configuration, it is possible to reduce the overhead and notify the delay time together with the BSR.

### (Supplementary note 7)

A base station apparatus configured to perform scheduling of an uplink according to a buffer state report indicating a buffer size of uplink data transmitted from a terminal apparatus, comprising:
receiving means for receiving an elapsed time from the terminal apparatus as a delay time, the elapsed time being a time from when the terminal apparatus receives a packet from a higher layer to when the uplink data is transmitted to the base station apparatus by using a radio resource for the uplink allocated by the base station apparatus; and
scheduling means for performing scheduling of the uplink based on the delay time.

According to the above-described configuration, the base station apparatus can appropriately control the scheduling of an uplink based on the delay time in the terminal apparatus.

### (Supplementary note 8)

A communication system comprising a terminal apparatus configured to transmit uplink data to a base station apparatus by using a radio resource for an uplink allocated by the base station apparatus, and a base station apparatus configured to perform scheduling of the uplink according to a buffer state report indicating a buffer size of the uplink data transmitted from the terminal apparatus, wherein
the terminal apparatus comprises:
measuring means for measuring an elapsed time from when a packet is received from a higher layer to when the uplink data is transmitted to the base station apparatus by using the radio resource for the uplink; and
transmitting means for transmitting the measured elapsed time to the base station apparatus as a delay time, and
the base station apparatus comprises:
   receiving means for receiving the delay time from the terminal apparatus; and
   scheduling means for performing scheduling of the uplink based on the delay time.

According to the above-described configuration, the base station apparatus can appropriately control the scheduling of an uplink based on the delay time in the terminal apparatus.

### (Supplementary note 9)

A communication method for a terminal apparatus configured to transmit uplink data to a base station apparatus by using a radio resource for an uplink allocated by the base station apparatus, the communication method comprising:
measuring an elapsed time from when a packet is received from a higher layer to when the uplink data is transmitted to the base station apparatus by using the radio resource for the uplink; and
transmitting the measured elapsed time to the base station apparatus as a delay time.

According to the above-described configuration, the base station apparatus can appropriately control the scheduling of an uplink based on the delay time in the terminal apparatus.

### (Supplementary note 10)

A program for a computer provided in a terminal apparatus configured to transmit uplink data to a base station apparatus by using a radio resource for an uplink allocated by the base station apparatus, the program being configured to cause the computer to perform:
a process for measuring an elapsed time from when a packet is received from a higher layer to when the uplink data is transmitted to the base station apparatus by using the radio resource for the uplink; and
a process for transmitting the measured elapsed time to the base station apparatus as a delay time.

According to the above-described configuration, the base station apparatus can appropriately control the scheduling of an uplink based on the delay time in the terminal apparatus.

### (Supplementary note 11)

A terminal apparatus configured to transmit uplink data to a base station apparatus by using a radio resource for an uplink allocated by the base station apparatus, comprising at least one processor,
the processor being configured to perform:
a process for measuring an elapsed time from when a packet is received from a higher layer to when the uplink data is transmitted to the base station apparatus by using the radio resource for the uplink; and
a process for transmitting the measured elapsed time to the base station apparatus as a delay time.

Note that the terminal apparatus may further include a memory, and a program for causing the processor to perform the measuring process and the transmitting process may be stored in the memory.

Further, the program may be recorded on a non-transitory tangible recording medium that a computer can read.

### (Supplementary note 12)

A base station apparatus configured to perform scheduling of an uplink according to a buffer state report indicating a buffer size of uplink data transmitted from a terminal apparatus, comprising at least one processor,
the processor being configured to perform:
a process for receiving an elapsed time from the terminal apparatus as a delay time, the elapsed time being a time from when the terminal apparatus receives a packet from a higher layer to when the uplink data is transmitted to the base station apparatus by using a radio resource for the uplink allocated by the base station apparatus; and
a process for performing scheduling of the uplink based on the delay time.

Note that the base station apparatus may further include a memory, and a program for causing the processor to perform the receiving process and the process for performing scheduling may be stored in the memory.

Further, the program may be recorded on a non-transitory tangible recording medium that a computer can read.

### Reference Signs List

- 1, 1-1 to 1-n: TERMINAL APPARATUS
- 2: BASE STATION APPARATUS
- 11: MEASURING MEANS
- 12: TRANSMITTING MEANS
- 21: RECEIVING MEANS
- 22: SCHEDULING MEANS
- 100: COMMUNICATION SYSTEM

## Claims

1. A terminal apparatus configured to transmit uplink data to a base station apparatus by using a radio resource for an uplink allocated by the base station apparatus, comprising:
measuring means for measuring an elapsed time from when a packet is received from a higher layer to when the uplink data is transmitted to the base station apparatus by using the radio resource for the uplink; and
transmitting means for transmitting the measured elapsed time to the base station apparatus as a delay time.

2. The terminal apparatus according to claim 1, wherein the elapsed time includes a time from when a scheduling request is notified to the base station apparatus to when an uplink grant is received from the base station apparatus.

3. The terminal apparatus according to claim 1 or 2, wherein the transmitting means transmits the delay time by adding the delay time to a medium access control element of the packet.

4. The terminal apparatus according to claim 3, wherein the medium access control element includes a logical channel group identifier and an index indicating a delay time.

5. The terminal apparatus according to claim 3, wherein the medium access control element includes a plurality of logical channel group identifiers and a plurality of delay times each corresponding to a respective one of the plurality of logical channel group identifiers.

6. The terminal apparatus according to claim 3, wherein the medium access control element includes a buffer state report indicating a buffer size of uplink data, and a delay time.

7. A base station apparatus configured to perform scheduling of an uplink according to a buffer state report indicating a buffer size of uplink data transmitted from a terminal apparatus, comprising:
receiving means for receiving an elapsed time from the terminal apparatus as a delay time, the elapsed time being a time from when the terminal apparatus receives a packet from a higher layer to when the uplink data is transmitted to the base station apparatus by using a radio resource for the uplink allocated by the base station apparatus; and
scheduling means for performing scheduling of the uplink based on the delay time.

8. A communication system comprising a terminal apparatus configured to transmit uplink data to a base station apparatus by using a radio resource for an uplink allocated by the base station apparatus, and a base station apparatus configured to perform scheduling of the uplink according to a buffer state report indicating a buffer size of the uplink data transmitted from the terminal apparatus, wherein
the terminal apparatus comprises:
measuring means for measuring an elapsed time from when a packet is received from a higher layer to when the uplink data is transmitted to the base station apparatus by using the radio resource for the uplink; and
transmitting means for transmitting the measured elapsed time to the base station apparatus as a delay time, and
the base station apparatus comprises:
receiving means for receiving the delay time from the terminal apparatus; and
scheduling means for performing scheduling of the uplink based on the delay time.

9. A communication method for a terminal apparatus configured to transmit uplink data to a base station apparatus by using a radio resource for an uplink allocated by the base station apparatus, the communication method comprising:
measuring an elapsed time from when a packet is received from a higher layer to when the uplink data is transmitted to the base station apparatus by using the radio resource for the uplink; and
transmitting the measured elapsed time to the base station apparatus as a delay time.

10. A program for a computer provided in a terminal apparatus configured to transmit uplink data to a base station apparatus by using a radio resource for an uplink allocated by the base station apparatus, the program being configured to cause the computer to perform:
a process for measuring an elapsed time from when a packet is received from a higher layer to when the uplink data is transmitted to the base station apparatus by using the radio resource for the uplink; and
a process for transmitting the measured elapsed time to the base station apparatus as a delay time.
